# EUROPEAN PATENT APPLICATION

(11) **EP 4 574 794 A1**
(43) Date of publication of application: **25.06.2025**
(21) Application number: 23307303.0
(22) Date of filing: 21.12.2023
(51) Int. Cl.: C04B 28/04, C04B 111/62

(54) **COMPOSITION FOR SELF-LEVELLING ULTRA-HIGH PERFORMANCE CONCRETE**

(71) Applicant: Holcim Technology Ltd, 6300 Zug (CH)
(72) Inventor: TERMKHAJORNKIT, Pipat, 38070 SAINT QUENTIN FALLAVIER (FR); HANDOUR, Mohamed-Amine, 38070 SAINT QUENTIN FALLAVIER (FR); LABYAD, Abdelaziz, 38070 SAINT QUENTIN FALLAVIER (FR)
(74) Representative: Regimbeau

(57) **Abstract**

The invention relates to a composition for self-levelling ultra-high-performance concrete comprising a binder, sand and water, the binder comprises Portland clinker, wherein the Portland clinker content in the composition is less than 330 kg/m³,
and wherein the binder comprises:
- Portland clinker, in a content less than 30 % by weight of Portland clinker compared to the total weight of the binder;
- Silica fume;
- Slag and mineral addition A1,
∘ the D50 of the particles of mineral addition A1 ranges from 2 µm to 50 µm;
∘ mineral addition A1 is selected from limestone additions such as material containing calcium carbonate, siliceous additions such as quartz, siliceous limestone mineral additions, recycled concrete fines, calcined shales, zeolites, burnt plant ashes, fly ash, calcined clays, pozzolanic materials and mixtures thereof;
∘ the content of (slag + mineral addition A1) ranges from 50 % to 76 % by weight of (slag + mineral addition A1) compared to the total weight of the binder;
∘ the mass ratio slag/mineral addition A1 ranges from ≥ 0.27 to 20, preferably from ≥ 0.27 to 5 ;

- the total content of Portland clinker, silica fume, slag and mineral addition A1 ranges from 90 % to 100 % by weight compared to the total weight of the binder;

and wherein the composition comprises:
- from 1000 kg/m³ to less than 1200 kg/m³ of binder;
- from 100 kg/m³ to less than 200 kg/m³ of water;
- from 1000 kg/m³ to less than 1200 kg/m³ of sand.

## Description

### FIELD OF THE INVENTION

The present invention concerns a composition for self-levelling ultra-high performance concrete with a low content of Portland clinker, as well as shaped objects in the field of buildings based on such compositions.

### BACKGROUND OF THE INVENTION

Technological progress in recent years in the field of concretes has led to the development of hydraulic binders allowing ultra-high performance concretes to be obtained, particularly in terms of compressive strength. These binders generally involve the recourse to additional materials other than cement and aggregates, e.g. fibres, organic admixtures, or so-called ultra-fine particles.

However, conventional ultra-high performance concretes have a relatively high cement content, generally of 700kg cement/m³ concrete to 1 000 kg cement/m³ concrete.

Yet the production of cement, in particular the production of clinker, is the cause of carbon dioxide emissions. Indeed, clinker production requires:
a) preheating and decarbonatation of the crude flour obtained by milling raw materials i.e. limestone and clay in particular; and
b) firing the decarbonated flour at a temperature of about 1 450°C, followed by cooling. These two steps produce CO₂, first as direct product of decarbonation of limestone and secondly as by-product of the combustion of fuels.

Conventional methods to produce cementitious compositions and concrete result in high carbon dioxide emissions.

There is therefore a need for a method allowing ultra-high performance concretes to be produced with a reduction in associated emissions of carbon dioxide.

### SUMMARY OF THE INVENTION

The invention is directed to a composition for self-levelling ultra-high-performance concrete comprising a binder, sand and water, the binder comprises Portland clinker, wherein the Portland clinker content in the composition is less than 330 kg/m³,
and wherein the binder comprises:
- Portland clinker, in a content less than 30 % by weight of Portland clinker compared to the total weight of the binder;
- Silica fume;
- Slag and mineral addition A1,
   ∘ the D50 of the particles of mineral addition A1 ranges from 2 µm to 50 µm;
   ∘ mineral addition A1 is selected from limestone additions such as material containing calcium carbonate, siliceous additions such as quartz, siliceous limestone mineral additions, recycled concrete fines, calcined shales, zeolites, burnt plant ashes, fly ash, calcined clays, pozzolanic materials and mixtures thereof;
   ∘ the content of (slag + mineral addition A1) ranges from 50 % to 76 % by weight of (slag + mineral addition A1) compared to the total weight of the binder;
   ∘ the mass ratio slag/mineral addition A1 ranges from ≥ 0.27 to 20, preferably from ≥ 0.27 to 5 ;
- the total content of Portland clinker, silica fume, slag and mineral addition A1 ranges from 90 % to 100 % by weight compared to the total weight of the binder;
and wherein the composition comprises:
- from 1000 kg/m³ to less than 1200 kg/m³ of binder;
- from 100 kg/m³ to less than 200 kg/m³ of water;
- from 1000 kg/m³ to less than 1200 kg/m³ of sand.

Advantageously, the mineral addition A1 is selected from material containing calcium carbonate, for example limestone.

Preferably, the silica fume content in the binder ranges from 10% to 25% by weight compared to the total weight of the binder, more preferably from 15% to 20% by weight, even more preferably from 16% to 18% by weight.

Preferably, the Portland clinker content in the binder ranges from 5% to less than 30 %, more preferably from 7% to less than 30 %, the % are expressed by weight compared to the total weight of the binder.

Preferably, the Portland clinker content in the binder is less than 19 %, more preferably from 5% to 15 %, even more preferably from 5% to 10%, the % are expressed by weight compared to the total weight of the binder.

Preferably, the mass ratio slag/ mineral addition A1 ranges from 0.5 to 3.5, more preferably from 0.5 to 3.0.

Preferably, the total content of Portland clinker, silica fume, slag and mineral addition A1 ranges from 95% to 100% by weight compared to the total weight of the binder.

Preferably, the source of Portland clinker is a cement selected from CEM I or CEM III.

Preferably, the composition comprises from 1050 kg/m³ to less than 1150 kg/m³ of binder

Preferably, the composition comprises less than 190 kg/m³, preferably less than 165 kg/m³ of water.

Preferably, the Portland clinker content in the composition is less than 201 kg/m³, more preferably less than 106 kg/m³.

Preferably, the composition further comprises fibres.

Preferably, the composition further comprises admixtures, in particular superplasticizers.

Preferably, the Portland clinker has particles with a D50 >11 µm.

The invention is also directed to a shaped object for the field of building based on the composition as defined above.

Other aspects of the invention are as described below.

### DEFINITIONS

The expression "hydraulic binder" or 'binder' is understood to mean, according to the present invention, a pulverulent material which, mixed with water, forms a paste which sets and hardens by a series of hydration reactions and processes and which, after hardening, retains its strength and its stability even under water.

The term "concrete" is understood to mean a mix of hydraulic binders, of aggregates, of water, and additives, which is an ultra-high performance concrete. The concrete is a self-placing concrete, self-levelling concrete, self-compacting concrete and may be a fibre-reinforced concrete, ready-mix concrete or coloured concrete. The term "concrete" is also understood to mean concretes which have been subjected to a finishing operation, such as bush-hammered concrete, deactivated or washed concrete, or polished concrete. This definition is also understood to mean prestressed concrete. The term "concrete" comprises mortars: in this precise case, the concrete comprises a mix of hydraulic binder, of sand, of water and optionally of additives. The term "concrete" according to the invention denotes without distinction fresh concrete or hardened concrete.

The expression "high performance concrete" is understood to mean a concrete having a compressive strength at 28 days of from 50 MPa to 100 MPa. The expression "ultra-high performance concrete" is understood to mean a concrete having a compressive strength at 28 days greater than 100 MPa and generally greater than 120 MPa.

According to the invention, the expression "mineral additions" denotes a finely divided mineral material used in the concrete in order to improve certain properties or to confer specific properties on it.

A cement is a hydraulic binder comprising a proportion of at least 50 % by weight of calcium oxide (CaO) and silicon dioxide (SiO₂). The cement is preferably a Portland cement as defined in the standard NF-EN-197-1 of April 2012. The expression "Portland cement" is understood to mean, for example, according to the invention, a cement of CEM I, CEM II, CEM III, CEM IV or CEM V type according to the "Ciment" [Cement] Standard NF EN 197-1 of April 2012.

### DETAILED DESCRIPTION

The inventors have developed concrete compositions that meet the needs expressed.

The invention gives the possibility of achieving the need for reduction of CO₂ emissions. It was found that it is possible to lower the Portland clinker amount in the binder composition below 30 wt%, thus lowering the CO₂ emissions of the final concrete while maintaining the compressive strength above 100 MPa and the self-levelling properties of concrete at water levels below 20% by volume per m³ of the concrete.

A first object of the invention is thus a composition for self-levelling ultra-high-performance concrete comprising a binder, sand and water, the binder comprises Portland clinker, wherein the Portland clinker content in the composition is less than 330 kg/m³, and wherein the binder comprises:
- Portland clinker, in a content less than 30% by weight of Portland clinker compared to the total weight of the binder;
- Silica fume;
- Slag and mineral addition A1,
   ○ the D50 of the particles of mineral addition A1 ranges from 2 µm to 50 µm;
   ○ mineral addition A1 is selected from limestone additions such as material containing calcium carbonate, siliceous additions such as quartz, siliceous limestone mineral additions, calcined shales, zeolites, burnt plant ashes, fly ash, calcined clays, pozzolanic materials and mixtures thereof;
   ○ the content of (slag + mineral addition A1) ranges from 50% to 76% by weight of (slag + mineral addition A1) compared to the total weight of the binder;
   ○ the mass ratio slag/mineral addition A1 ranges from ≥ 0.27 to 20, preferably from ≥ 0.27 to 5;
- the total content of Portland clinker, silica fume, slag and mineral addition A1 ranges from 90% to 100% by weight compared to the total weight of the binder;
and wherein the composition comprises:
- from 1000 kg/m³ to less than 1200 kg/m³ of binder;
- from 100 kg/m³ to less than 200 kg/m³ of water;
- from 1000 kg/m³ to less than 1200 kg/m³ of sand.

### Binder

The binder according to the invention comprises a Portland clinker. The source of Portland clinker can be a Portland cement as defined above.

Depending on its type, the Portland cement may comprise slag, silica fume or calcium carbonate.

Advantageously, the source of Portland clinker is a cement selected from CEM I or CEM III Portland cement as defined in "Ciment" [Cement] Standard NF EN 197-1 of April 2012. CEM III Portland cement can be a Type A or B or C cement.

Advantageously, the cements suitable for use in the present invention are generally Portland cements for which the Blaine surface area ranges from 3 000 to 10 000 cm²/g.

Advantageously, the particles of Portland clinker have a D50 higher than 11 µm, meaning that no fine grinding to obtain particles with a D50 lower than 11 µm is necessary. Such embodiments are particularly advantageous in terms of cost and carbon dioxide emissions since the grinding energy to decrease particles size is reduced.

The Portland clinker particles may have a D50 higher than 11 µm and/or a D90 higher than 40 µm.

The Portland clinker particles may have a D50 from 11 µm to 30 µm.

The Portland clinker particles may have a D50 from 11 µm to 30 µm and/or a D90 from 40 µm to 110 µm.

In some embodiments, the particles of Portland clinker have a D50 lower than 11 µm and and/or a D90 < 40 µm.

D90, also noted as Dv90, corresponds to the 90thcentile of the volume distribution of particle sizes, i.e. 90% of the volume consists of particles for which the size is less than D90 and 10% with a size greater than D90.

Also, D50, also noted as Dv50, corresponds to the 50thcentile of the volume distribution of particle sizes, i.e. 50% of the volume consists of particles for which the size is less than D50 and 50% with a size greater than D50.

D50 or D90 of a set of particles may generally be determined by laser particle size measurement for particles with a size of less than 800 µm.

Portland clinker is present in the binder in a content less than 30% by weight of Portland clinker compared to the total weight of the binder.

Advantageously, the Portland clinker content in the binder ranges from 5% to less than 30 %, preferably from 7% to less than 30 %, the % are expressed by weight compared to the total weight of the binder.

Advantageously, the Portland clinker content in the binder is less than 19%, preferably from 5% to 15%, more preferably from 5% to 10%, the % are expressed by weight compared to the total weight of the binder.

The invention gives the possibility of achieving the need for reduction of CO₂ emissions by reducing the amount of Portland clinker in the binder to values below 30% and, advantageously to values as low as 5 to 10%.

The binder according to the invention comprises silica fume, for example, as defined in the European NF EN 197-1 Standard of April 2012, paragraph 5.2.7.

Silica fume may be a material obtained by the reduction of very pure quality quartz by the coal in electric arc furnaces used for the production of silicon and alloys of ferrosilicon. Silica fume is generally formed of spherical particles comprising at least 85% by weight of amorphous silica.

Silica fume comprises particles that have a D50 between 0.05 and 100 µm, preferably between 0.05 and 1 µm.

Advantageously, the silica fume content in the binder ranges from 10% to 25% by weight compared to the total weight of the binder, preferably from 15% to 20% by weight, more preferably from 16% to 18% by weight.

The binder according to the invention also comprises slag, for example, as defined in the European NF EN 197-1 Standard of April 2012, paragraph 5.2.2.

Slag is generally obtained by rapid cooling of molten slag resulting from melting of iron ore in a furnace. Ground granulated blast furnace slag is generally used. Slag can also be obtained by electric arc furnaces, and such slags are a non-metallic by-product that consists mainly of silicates and oxides formed during the process of refining the molten steel. The feed materials for electric arc furnace slags are mainly steel scrap and pig iron.

Slag is preferably ground granulated blast furnace slag. Preferably, ground granulated blast furnace slag has a Blaine specific surface ranging from 2 000 to 6 000 cm²/g, preferably from 3 000 to 5 000 cm²/g.

Slag can be added to the source of Portland clinker and/or can be initially present in the source of Portland clinker.

The binder according to the invention comprises a mineral addition A1 selected from limestone additions such as material containing calcium carbonate, siliceous additions such as quartz, siliceous limestone mineral additions, calcined shales, zeolites, burnt plant ashes, fly ash, calcined clays, pozzolanic materials and mixtures thereof.

The material containing calcium carbonate may be for example limestone (for example, as defined in the European NF EN 197-1 Standard of April 2012 paragraph 5.2.6) or limestone components (for example, as defined in the "Concrete" NF P 18-508 Standard).

The siliceous additions may be siliceous components (for example, as defined in the "Concrete" NF P 18-509 Standard).

Examples of siliceous components are ground glass, solid or hollow glass beads, glass granules, expanded glass powder.

Calcined shales may be, for example, as described in the European NF EN 197-1 Standard of April 2012, paragraph 5.2.5.

Fly ash is described in the European NF EN 197-1 Standard of April 2012, paragraph 5.2.4) Fly ash is generally composed of pulverulent particles comprised in fumes from thermal power plants which are fed with coal. Fly ash is generally recovered by electrostatic or mechanical precipitation.

Pozzolanic materials may be, for example, as defined in the European NF EN 197-1 Standard of April 2012, paragraph 5.2.3)

The pozzolanic materials may be natural siliceous and/or silico-aluminous materials or a combination thereof. Among the pozzolanic materials, natural pozzolans can be mentioned, which are generally materials of volcanic origin or sedimentary rocks, and natural calcined pozzolans, which are materials of volcanic origin, clays, shale or thermally-activated sedimentary rocks.

Advantageously, the mineral addition A1 is selected from material containing calcium carbonate, for example limestone.

The D50 of the particles of mineral addition A1 advantageously ranges from 4 µm to 50 µm.

Advantageously, the source of Portland clinker is a CEM I Portland cement and silica fume, slag and mineral addition are added to the Portland cement.

In some embodiments, the source of Portland clinker is a CEM III A or B or C Portland cement and silica fume, slag and mineral addition are added to the Portland cement. CEM III Portland cement already comprises slag and additional slag can be added in the binder composition. Binder slag content in the present application refers to the total binder slag content.

The mass ratio slag/ mineral addition A1 in the binder ranges from ≥ 0.27 to 20.

For concrete compositions with binders with comparable composition apart from the slag/mineral addition A1 ratio, compressive strength increases with the increase of the mass ratio slag/mineral addition A1.

The mass ratio slag/ mineral addition A1 in the binder can range from ≥ 0.27 to 15, from ≥ 0.27 to 10, or from ≥ 0.27 to 5.

Advantageously, the mass ratio slag/mineral addition A1 ranges from 0.5 to 3.5, more preferably from 0.5 to 3.0.

It is thus possible to lower the Portland clinker amount in the binder composition below 30 wt%, thus lowering the CO₂ emissions of the final concrete while maintaining the compressive strength above 100 MPa and the self-levelling properties of concrete at water levels below 20% by volume per m³ of the concrete.

For example, it is possible to have a Portland clinker amount in the binder composition from 5 wt% to 10 wt% while maintaining the compressive strength above 100 MPa.

For example, it is possible to have a Portland clinker amount in the binder composition from 15 wt% to 20 wt% while maintaining the compressive strength above 150 MPa.

For example, it is possible to have a Portland clinker amount in the binder composition from 25 wt% to 30 wt% while maintaining the compressive strength above 150 MPa.

In addition, it is possible to use Portland clinker particles whose D50 is higher than 11 µm, and at the same time to decrease the amount of clicker in the binder below 30% and achieve compressive strength values not lower than 100 Mpa.

Advantageously, the total content of Portland clinker, silica fume, slag and mineral addition A1 ranges from 95% to 100% by weight compared to the total weight of the binder.

### Composition for concrete

The composition for concrete comprises per m³:
- from 1000 kg/m³ to less than 1200 kg/m³ of the binder;
- from 100 kg/m³ to less than 200 kg/m³ of water;
- from 1000 kg/m³ to less than 1200 kg/m³ of sand.

Advantageously, the composition for concrete mainly comprises the binder, water and sand. Advantageously, the total content of binder, water and sand ranges from 90% to 100% by volume.

The composition for concrete comprises sand.

Sand is preferably a siliceous sand or a siliceous-calcareous sand.

Sand is composed of particles with a size below 4 mm.

Sand is preferably composed of particles that have a size greater than 0 mm to 2 mm (noted 0/2), preferably greater than 0 mm to 0.5 mm (noted 0/0.5) or greater than 0 mm to 1.6 mm (noted 0/1.6).

Advantageously, the composition for concrete comprises from 1050 kg/m³ to less than 1150 kg/m³ of binder.

Advantageously, the water content in the composition is less than 190 kg/m³, preferably less than 165 kg/m³.

The Portland clinker content in the concrete composition is less than 330 kg/m³.

Advantageously, the Portland clinker content in the composition is less than 201 kg/m3, preferably less than 106 kg/m³.

The composition for concrete may further comprise fibres, for example mineral fibres (glass, basalt), organic fibres, metal fibres (steel) or a mixture thereof.

The organic fibres may notably be selected from among polyvinyl alcohol (PVA) fibres, poly-acrylonitrile (PAN) fibres, high density polyethylene (HDPE) fibres, polyamide or polyimide fibres, polypropylene fibres, aramid fibres or carbon fibres. Mixtures of these fibres may also be used.

These organic fibres may appear as an object either consisting of single strand or multiple strands, the diameter of the object ranging from 25 microns to 800 microns. The individual length of the organic fibres is preferably comprised between 10 and 50 mm.

As for metal fibres, these may be metal fibres selected from among steel fibres such as high mechanical strength steel fibres, amorphous steel fibres, or further stainless steel fibres.

Optionally, the steel fibres may be coated with a non-ferrous metal such as copper, zinc, nickel (or their alloys).

The individual length of the metal fibres is preferably of at least 2 mm and is, even more preferentially, comprised in the range 10-30 mm.

Fibres which are notched, corrugated or hooked-up at the ends may be used.

Preferably, the amount of fibres is comprised from 0 to 6%, even more preferentially from 1 to 5% of the volume of the composition for concrete.

Resorting to mixtures of fibres with different features gives the possibility of adapting the properties of the concrete with respect to the sought features.

Fibres are especially used to reinforce tensile strength of concrete, making it more resistant to cracking and improving its durability. Moreover, fibres improve the ductility of concrete therefore enhancing its ability to deform without sudden failure after the first set of cracks appears. Fiber-reinforced concrete can continue to carry loads even after it has cracked. The presence of fibres in concrete also allows for energy absorption. This energy absorption helps to dissipate the energy, allowing the concrete to deform and redistribute stresses rather than experiencing abrupt failure.

The concrete composition according to the invention may also comprise an admixture, for example one of those described in the EN 934-2 standards as of September 2002, EN 934-3 standard as of November 2009 or EN 934-4 as of August 2009.

Preferably, the concrete compositions according to the invention also comprise an admixture for a concrete composition, for example an accelerator, a viscosity modifying agent, an antifoaming agent, a retarder, a clay inerting agent, a shrinkage-reducing agent, a plasticizer and/or a superplasticizer.

In particular, the composition for concrete according to the invention may comprise a superplasticizer.

The term of "superplasticizer" as used in the present description and in the claims which accompany it is to be understood as including both water reducing agents and superplasticizers as described in the book entitled "Concrete Admixtures Handbook, Properties Science and Technology", V. S. Ramachandran, Noyes Publications, 1984.

A water reducing agent is defined as an admixture which typically reduces the amount of mixing water by 10 to 15% typically of a concrete for a given workability. The water reducing agents include, for example lignosulfonates, hydroxycarboxylic acids, carbohydrates and other specialized organic compounds, e.g. glycerol, polyvinyl alcohol, sodium alumino-methyl-siliconate, sulfanilic acid and casein.

The superplasticizers belong to a new class of water reducing agents, chemically different from normal water reducing agents and able to reduce the amounts of water by about 30%. Superplasticizers have been globally classified in four groups: sulfonated condensates of naphthalene formaldehyde (SNF) (generally a sodium salt); sulfonate condensates of melamine formaldehyde (SMF); modified lignosulfonates (MLS); and others. More recent superplasticizers include polycarboxylic compounds such as polycarboxylates, e.g. polyacrylates. A superplasticizer is preferably a new generation superplasticizer, e.g. a copolymer containing a polyethylene glycol as a grafted chain and carboxylic functions in the main chain like a polycarboxylic ether. Sodium polycarboxylates-polysulfonates and sodium polyacrylates may also be used. The derivatives of phosphonic acid may also be used. The required amount of superplasticizer generally depends on the reactivity of the cement. The lower the reactivity, the smaller is the required amount of superplasticizer. In order to reduce the total amount of alkaline salts, the superplasticizer may be used as a calcium salt rather than as a sodium salt.

Derivatives of phosphonic acids may also be used. Sodium polycarboxylate-polysulfonates and sodium polyacrylates may also be used. The required amount of superplasticizer generally depends on the reactivity of the cement. The lower the reactivity, the smaller is the required amount of superplasticizer. In order to reduce the total content of alkaline salts, the superplasticizer may be used as a calcium salt rather than as a sodium salt.

In particular, it is useful to include a superplasticizer of the polycarboxylate type, in particular from 10.0 kg/m³ to 40.0 kg/m³, preferably from 15.0 kg/m³ to 25.0 kg/m³.

The superplasticizer content can be reduced in the concrete composition according to the invention.

The hydraulic composition according to the invention may further comprise an antifoaming agent, for example polydimethylsiloxane. The antifoaming agents also comprise silicones as a solution, solid or preferably as a resin, an oil or an emulsion, preferably in water. Silicones comprising groups (RSiO_{0.5}) and (R₂SiO) are most particularly suitable. In these formulae, the radicals R, which may either be identical or different, are preferably a hydrogen atom or an alkyl group with 1 to 8 carbon atoms, the methyl group being preferred. The number of units is preferably from 30 to 120.

The hydraulic composition according to the invention may further comprise a viscosifying agent and/or an agent for modifying the flow limit (generally for increasing viscosity and/or flow limit). Such agents comprise: derivatives of cellulose, for example cellulose ethers soluble in water, such as sodium carboxymethyl, methyl, ethyl, hydroxyethyl and hydroxypropyl ethers; alginates; and xanthan, carrageenan or guar gum. A mixture of these agents may be used.

The hydraulic composition according to the invention may further comprise an accelerator and/or a retarder.

When the composition further comprises admixtures and fibres, the total content of binder, water, sand, admixtures and fibres ranges from 95% to 100% by volume per m³, preferably from 98% to 100% by volume per m³.

The concrete composition according to the invention can be prepared according to processes known to a person skilled in the art, comprising the mixing of the solid components and water, the shaping (for example, moulding, pouring, injection, pumping, extrusion or calendering) and the hardening.

Advantageously, the concrete composition obtained according to the invention has a compressional strength greater than or equal to 100 MPa at 28 days after mixing and/or greater than or equal to 95 MPa after heat treatment, for example after a heat treatment for 2 days at 90°C., made after 2 days at 20°C.

The hydraulic composition according to the invention may be subject to a heat treatment after setting in order to improve its mechanical properties. The treatment after setting, also called thermal curing of the concrete, is generally achieved at a temperature from 60° C. to 90°C. The temperature of the heat treatment should be less than the boiling temperature of water at ambient pressure. The temperature of the heat treatment after setting is generally less than 100°C.

The duration of the heat treatment after setting may for example be from 6 hours to 4 days, preferably of about 2 days. The heat treatment may begin, generally at least one day before the beginning of the setting and preferably on concrete with an age from 1 to 7 days at 20° C.

The heat treatment may be carried out in dry or humid environments or according to cycles which alternate both environments, for example, a 24-hour treatment in a humid environment followed by a treatment for 24 hours in a dry environment.

The invention further relates to an element made of hardened concrete.

Another object of the invention is thus a shaped object for the field of building based on the composition for concrete as described above.

The following measurement methods were used.

### Laser Particle Size Measurement Method

The grain size curves of the different powders are obtained with a laser Malvern MS2000 granulometer. The measurement is carried out in a suitable medium (for example, in an aqueous medium); the size of the particles should be comprised from 0.02 µm to 2 mm. The light source consists of a red He-Ne laser (632 nm) and a blue diode (466 nm). The optical model is the Fraunhofer one, the computation matrix is of the polydisperse type. A measurement of background noise is first of all carried out with a pump rate of 2,000 rpm, a stirring rate of 800 rpm and a measurement of noise over 10 s, in the absence of ultrasonic waves. It is then checked that the light intensity of the laser is at least equal to 80%, and that a decreasing exponential curve is obtained for the background noise. If this is not the case, the lenses of the cell have to be cleaned.

A first measurement is then carried out on the sample with the following parameters: pump rate of 2 000 rpm, stirring rate of 800 rpm, absence of ultrasonic waves, obscuration limit between 10 and 20%. The sample is introduced in order to have an obscuration slightly greater than 10%. After stabilization of the obscuration, the measurement is carried out with a duration between the immersion and the measurement set to 10 s. The measurement duration is of 30 seconds (30 000 analysed diffraction images). In the obtained granulogram, the fact that a portion of the population of the powder may be agglomerated should be taken into account.

Next a second measurement (without emptying the tank) is then carried out with ultrasonic waves. The pump rate is brought to 2 500 rpm, the stirring to 1 000 rpm, the ultrasonic waves are 100% emitted (30 Watts). This rate is maintained for 3 minutes, and then one returns to the initial parameters: pump rate 2 000 rpm, stirrer rate of 800 rpm, absence of ultrasonic waves. After 10 seconds (for removing the possible air bubbles), a measurement is made for 30 seconds (30 000 analysed images). This second measurement corresponds to a powder de-agglomerated by ultrasonic dispersion.

Each measurement is repeated at least twice in order to check the stability of the result. The apparatus is calibrated before each working session by means of a standard sample (silica C10 Sifraco) the grain size curve of which is known. All the measurements shown in the description and the announced ranges correspond to the values obtained with ultrasonic waves.

### Compressional Strength Measurement Method

Regardless of the deadline, the compressional strength is measured on cylindrical sample having a diameter of 7 cm and a height of 14 cm, the surfaces on which the compressive force is applied to the sample are flattened.

The applied compressive force is increased up to a level of 3.85 kN/s during the compression test.

### Slump flow measurement

The slump flow measurement is measured according to the ASTM C230/C230M standard without vibration.

### EXAMPLES

### Raw materials

| Material | Supplier | Referenced in examples as |
|---|---|---|
| CEM I Le Teil 52,5N | Lafarge France | Cement 1 |
| µ CEM I Le teil B | Lafarge France | Cement 2 |
| µ CEM I Villaluenga | Lafarge Spain | Cement 3 |
| CEM III/A 52,5 Le Teil (40% slag) | Lafarge France | Cement 4 |
| CEM III/C 32,5 N Ecocem (85% slag) | ECOCEM | Cement 5 |
| Slag | Lafarge France or Spain | |
| Sand BE01 | Sibelco, France | |
| Limestone filler Durcal 40 | Omya, France | Durcal 40 |
| Limestone filler Durcal 5 | Omya, France | Durcal 5 |
| Microsilica (silica fume) RIMA | Rima | |
| Steel fibres | Dominion | |
| Superplasticizer F2 | Chryso, France | F2 |
| Superplasticizer F9 | Chryso, France | F9 |

The cements were prepared by milling and separation of Portland cements stemming from identified cement works. Cement 1, 4 and 5 are industrial cements and were prepared by using an industrial ball mill with an industrial separator. Cement 3 is also an industrial cement but a very high efficiency separator was used. Cement 2 is the cement 1 but further ground by using an air jet milling machine associated with a very high efficiency separator. The obtained milled cements have a D50, and a Blaine specific surface area (SSB) as mentioned in the table below.

| Cement | D50 (µm) | SSB (cm²/g) |
|---|---|---|
| Cement 1 | 13.7 | 3 750 |
| Cement 2 | 9.2 | 4 920 |
| Cement 3 | 6.8 | 7 270 |
| Cement 4 | 11.4 | 4 760 |
| Cement 5 | 12.5 | 4 400 |

CEM III Portland cements 4 and 5 comprise respectively 40% and 85% in weight of slag relative to the weight CEM III Portland cement.

When slag is added in the binder composition, slag particles have a D50 of about 13 µm and a Blaine specific surface area (SSB) of about 5 000 cm²/g.

The sand no. 1 BE01 is a siliceous sand from Sibelco. It has a D50 of about 356 µm.

Limestone filler Durcal 40 has a D50 of 24 µm and a Blaine specific surface area (SSB) of 31 34 cm²/g.

Limestone filler Durcal 5 has a D50 of about 7 µm and a Blaine specific surface area (SSB) of about 7 800 cm²/g.

Limestone fillers correspond to mineral addition A1.

The silica fume Microsilica from Rima has a D50 of 0.4 µm.

The steel fibres with Length/Diameter equal to 14 mm/0.2 mm are used. They are a commercial product from Dominion.

The superplasticizers F2 and F9 are superplasticizers based on modified polycarboxylate, the dry extract concentration of which is respectively 29% and 30.15% % in weight.

### Compositions for concrete

Binder compositions and concrete compositions are given in the tables below.

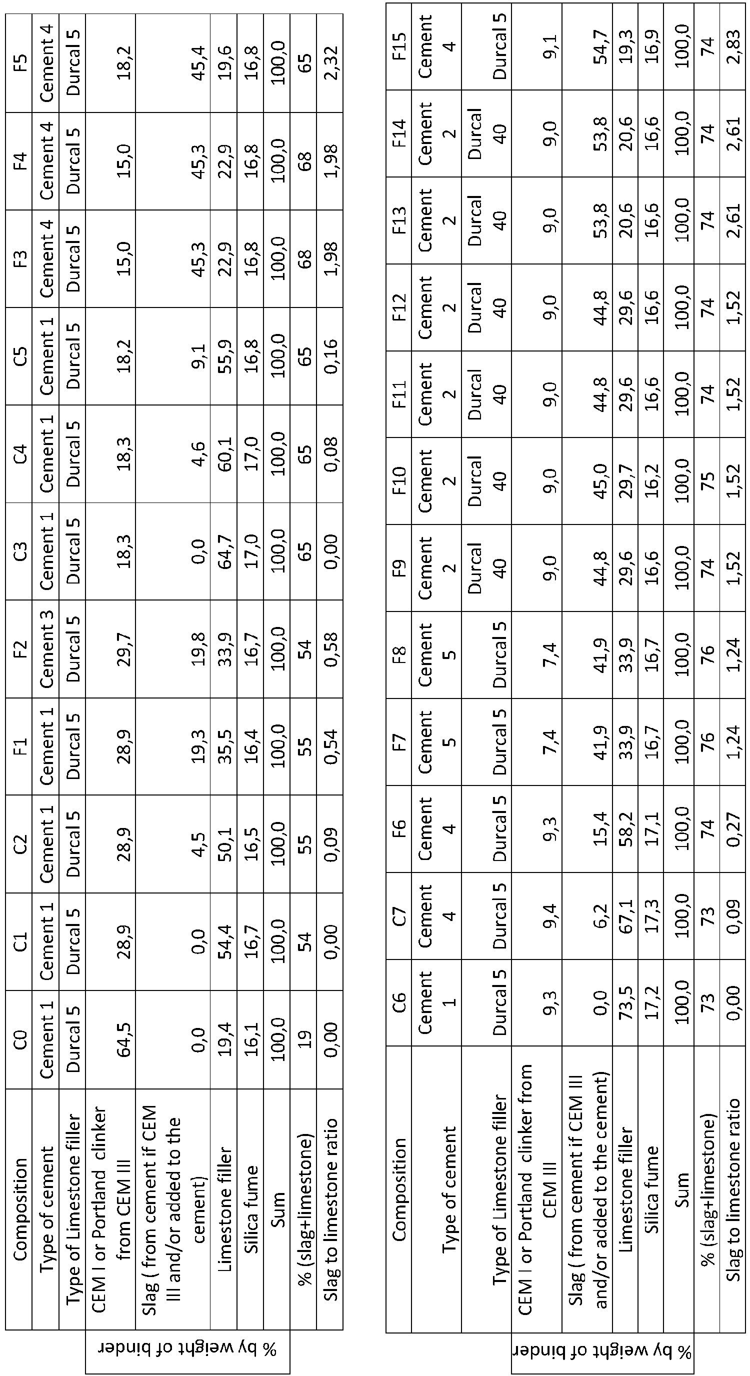

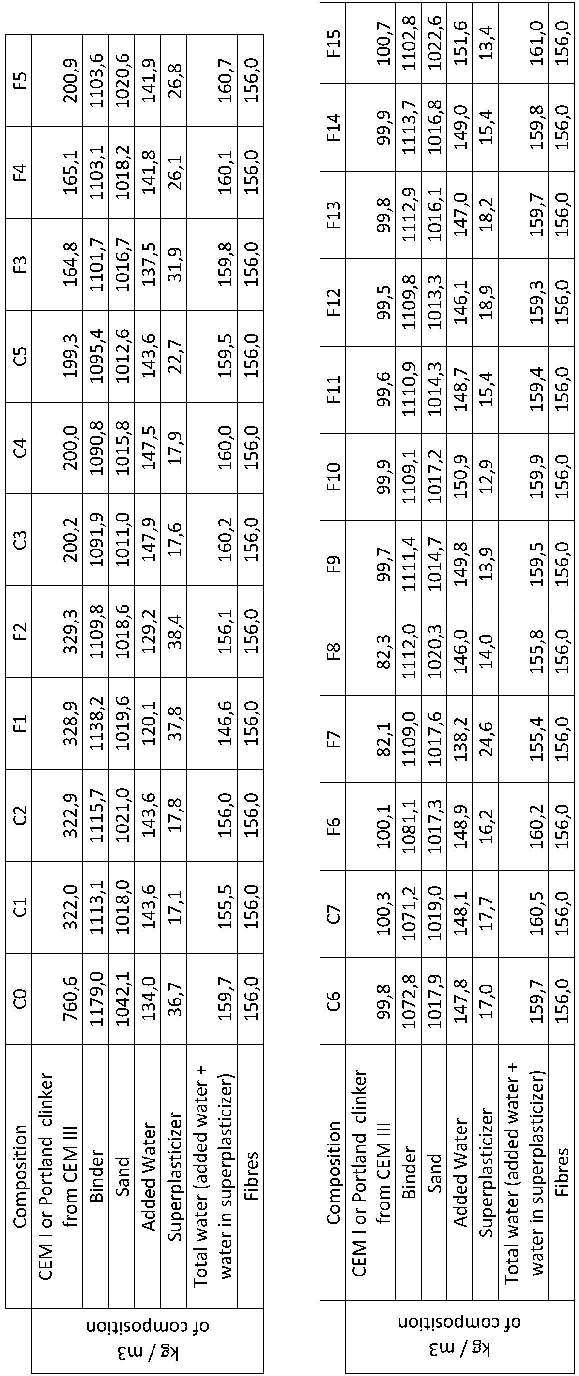

Compositions named 'CX' - C0-C7 - are comparative compositions, not according to the invention.

C0 is the composition of a conventional ultra-high performance concrete have a high Portland clinker content, higher than 700 kg per m³.

Compositions named 'FY' - F1-F15 - are compositions according to the invention.

### Equipment:

- kneader-mixer RAYNERI R601, which was provided by VMI with a tank of 10 liters, is used. This kneader exerts a planetary rotary movement;
- cylindrical cardboard molds with a diameter of 7 cm and a height of 14 cm;
- a weathering chamber with 95-100% relative hygrometry and 90° C.+/-1° C. provided by Verre Labo Mula;
- a humid chamber with 95-100% relative hygrometry and 20+/-1° C.

### Procedure for preparing the composition for concrete according to the Invention:

The concrete was manufactured according to the procedure described hereafter:
1) introduction of the dry materials (sand, A1, cement, slag and silica fume) in the bowl of the Rayneri kneader;
2) mixing for 5 minutes at the rate of 15 revolutions per minute (rpm), for homogenizing the dry materials;
3) introduction of the mixing water, of the super-plasticizer in 30 seconds. T0 is the moment that the solids touch the liquid; changing the mixing rate to 35 rpm;
4) At T5 (5 minutes after the solids have touched the liquid), changing the mixing rate to 50 rpm;
5) At T8 (8 minutes after the solids have touched the liquid), add fibers in two times, mixing 30 seconds at 15 rpm between each addition, continue mixing until 12 minutes.

A fresh concrete was obtained. The concrete was cast into cylindrical molds. The obtained molded specimens are hermetically closed and are pending for 24 hours at 20° C. Next, the specimens are removed from the mold and are placed in a humid chamber for 28 days at 20° C and 100% of relative humidity.

Slump flow measurement and mechanical strength were then measured.

### Results

The table below summarizes the results of slump flow measurements (in mm) for the different concrete compositions after step 5), at T90 (90 minutes after the solids have touched the liquid) and T120 (120 minutes after the solids have touched the liquid).

| | Flow after step 5) (stabilized) | Flow T=90 (stabilized) | Flow T=120 (stabilized) |
|---|---|---|---|
| C0 | 250 | 205 | 155 |
| C1 | 200 | - | - |
| C2 | 210 | - | - |
| F1 | 250 | 250 | 230 |
| F2 | 230 | 225 | 220 |
| C3 | 225 | 205 | 155 |
| C4 | 205 | - | - |
| C5 | 280 | 235 | 195 |
| F3 | 300 | 285 | 280 |
| F4 | 280 | 280 | 275 |
| F5 | 275 | 265 | 255 |
| C6 | 260 | 195 | - |
| C7 | 260 | 175 | - |
| F6 | 225 | - | - |
| F7 | 270 | 260 | 260 |
| F8 | 245 | - | - |
| F9 | 230 | - | - |
| F10 | 265 | 130 | - |
| F11 | 270 | 130 | - |
| F12 | 225 | 215 | 205 |
| F13 | 250 | 140 | - |
| F14 | 265 | 100 | - |
| F15 | 240 | 160 | - |

C0 composition is a conventional concrete composition with high cement content and is a self-levelling composition.

Compared to C0 composition, all the compositions have at least similar slump flow properties.

The concrete compositions are self-levelling compositions.

The table below summarizes the results of compressive strength tests for the different concrete compositions with varying amount of clinker in the binder and different slag/limestone ratio.

| | Compresive strength at 28 days ( MPa) | wt % clinker in binder | Slag / limestone wt ratio |
|---|---|---|---|
| C0 | 166,8 | 64,5 | 0,00 |
| C1 | 136,0 | 28,9 | 0,00 |
| C2 | 135,6 | 28,9 | 0,09 |
| F1 | 152,9 | 28,9 | 0,54 |
| F2 | 152,4 | 29,7 | 0,58 |
| C3 | 111,8 | 18,3 | 0,00 |
| C4 | 120,0 | 18,3 | 0,08 |
| C5 | 134,2 | 18,2 | 0,16 |
| F3 | 147,3 | 15,0 | 1,98 |
| F4 | 151,1 | 15,0 | 1,98 |
| F5 | 151,2 | 18,2 | 2,32 |
| C6 | 88,6 | 9,3 | 0,00 |
| C7 | 94,0 | 9,4 | 0,09 |
| F6 | 101,8 | 9,3 | 0,27 |
| F7 | 117,0 | 7,4 | 1,24 |
| F8 | 116,3 | 7,4 | 1,24 |
| F9 | 112,8 | 9,0 | 1,52 |
| F10 | 122,7 | 9,0 | 1,52 |
| F11 | 123,2 | 9,0 | 1,52 |
| F12 | 110,3 | 9,0 | 1,52 |
| F13 | 114,2 | 9,0 | 2,61 |
| F14 | 119,0 | 9,0 | 2,61 |
| F15 | 111,6 | 9,1 | 2,83 |

For composition whose binder comprises Portland clinker in an amount lower than 10%, the data from C6 and C7 show that a compressive strength of 100 MPa could not be reached. This can be explained by the low slag/limestone ratio compared to the other samples. Increasing the ratio to a value of 0.27 (F6) results in increased strength reaching 101.8 MPa. Further increase of slag/limestone ratio above 1.24 leads to further increase in strength. Surprisingly strength values exceeding 120 MPa can be reached for clinker levels as low as 9 % (F10-F11).

A similar effect is obtained for compositions with higher amount of clinker. The results demonstrate that for samples with comparable clinker amount, compressive strength increases when slag/limestone ratio increases.

Data for compositions C5 and F4 show that by increasing slag/limestone ration from 0.16 to 1.98 it is possible to increase compressive strength from 134 to 151.1 MPa.

The same effect can be also observed for compositions whose binder comprises 29-30% Portland clinker: increasing the ratio of slag/limestone from 0.09 to 0.58 leads to an increase in strength from 135-152.4 MPa at almost equal amount of clinker (see C2 and F2 compositions).

Composition F4 demonstrates that even at low content of clinker (15% thus only 23% of the clinker content in the reference composition C0) a strength exceeding 150 MPa can be reached if the appropriate ratio slag/limestone is selected.

## Claims

1. Composition for self-levelling ultra-high-performance concrete comprising a binder, sand and water, the binder comprises Portland clinker, wherein the Portland clinker content in the composition is less than 330 kg/m³,
and wherein the binder comprises:
- Portland clinker, in a content less than 30 % by weight of Portland clinker compared to the total weight of the binder;
- Silica fume;
- Slag and mineral addition A1,
∘ the D50 of the particles of mineral addition A1 ranges from 2 µm to 50 µm;
∘ mineral addition A1 is selected from limestone additions such as material containing calcium carbonate, siliceous additions such as quartz, siliceous limestone mineral additions, recycled concrete fines, calcined shales, zeolites, burnt plant ashes, fly ash, calcined clays, pozzolanic materials and mixtures thereof;
∘ the content of (slag + mineral addition A1) ranges from 50 % to 76 % by weight of (slag + mineral addition A1) compared to the total weight of the binder;
∘ the mass ratio slag/mineral addition A1 ranges from ≥ 0.27 to 20, preferably from ≥ 0.27 to 5 ;
- the total content of Portland clinker, silica fume, slag and mineral addition A1 ranges from 90 % to 100 % by weight compared to the total weight of the binder;
and wherein the composition comprises:
- from 1000 kg/m³ to less than 1200 kg/m³ of binder;
- from 100 kg/m³ to less than 200 kg/m³ of water;
- from 1000 kg/m³ to less than 1200 kg/m³ of sand.

2. Composition according to claim 1, wherein the mineral addition A1 is selected from material containing calcium carbonate, for example limestone.

3. Composition according to claim 1 or 2, wherein the silica fume content in the binder ranges from 10% to 25% by weight compared to the total weight of the binder, preferably from 15% to 20% by weight, more preferably from 16% to 18% by weight.

4. Composition according to anyone of the preceding claims, wherein the Portland clinker content in the binder ranges from 5% to less than 30 %, preferably from 7% to less than 30 %, the % are expressed by weight compared to the total weight of the binder.

5. Composition according to anyone of the preceding claims, wherein the Portland clinker content in the binder is less than 19 %, preferably from 5% to 15 %, more preferably from 5% to 10%, the % are expressed by weight compared to the total weight of the binder.

6. Composition according to anyone of the preceding claims, wherein the mass ratio slag/ mineral addition A1 ranges from 0.5 to 3.5, more preferably from 0.5 to 3.0.

7. Composition according to anyone of the preceding claims, wherein the total content of Portland clinker, silica fume, slag and mineral addition A1 ranges from 95% to 100% by weight compared to the total weight of the binder.

8. Composition according to anyone of the preceding claims, wherein the source of Portland clinker is a cement selected from CEM I or CEM III.

9. Composition according to anyone of the preceding claims, wherein the composition comprises from 1050 kg/m³ to less than 1150 kg/m³ of binder

10. Composition according to anyone of the preceding claims, wherein the composition comprises less than 190 kg/m³, preferably less than 165 kg/m³ of water.

11. Composition according to anyone of the preceding claims, wherein the Portland clinker content in the composition is less than 201 kg/m³, preferably less than 106 kg/m³.

12. Composition according to anyone of the preceding claims, wherein the composition further comprises fibres.

13. Composition according to anyone of the preceding claims, wherein the composition further comprises admixtures, in particular superplasticizers.

14. Composition according to anyone of the preceding claims, wherein the Portland clinker has particles with a D50 >11 µm.

15. A shaped object for the field of building based on the composition as defined in any one of the preceding claims.
